Europäisches Patentamt

European Patent Office

Office européen des brevets

(19)

(11) Veröffentlichungsnummer: **0 151 388**
**A2**

(12) **EUROPÄISCHE PATENTANMELDUNG**

(21) Anmeldenummer: **85100119.8**

(22) Anmeldetag: **07.01.85**

(51) Int. Cl.⁴: **B 29 C 33/64**

(30) Priorität: **18.01.84 DE 3401484**

(43) Veröffentlichungstag der Anmeldung:
**14.08.85 Patentblatt 85/33**

(84) Benannte Vertragsstaaten:
**AT CH DE FR GB IT LI NL SE**

(71) Anmelder: **BAYER AG**
**Konzernverwaltung RP Patentabteilung**
**D-5090 Leverkusen 1 Bayerwerk(DE)**

(72) Erfinder: **Steinbach, Hans-Horst, Dr.**
**Im Birkelshof 1**
**D-5060 Bergisch-Gladbach 2(DE)**

(72) Erfinder: **Rieder, Matthias**
**Beienburger Strasse 22**
**D-5064 Rösrath(DE)**

(54) **Trennmittel für Polyurethan-Formmassen.**

(57) Die vorliegende Erfindung betrifft ein Trennmittel für Polyurethan-Formassen das auseinem organischen Lösungsmittel und TiO-gruppenhaltigen Polysiloxanverbindungen besteht.

EP 0 151 388 A2

BAYER AKTIENGESELLSCHAFT     5090 Leverkusen, Bayerwerk
Konzernverwaltung RP
Patentabteilung     Br/ABc    17. Jan. 1984

Trennmittel für Polyurethan-Formmassen

Die vorliegende Erfindung betrifft ein Trennmittel für Polyurethan-Formassen auf der Basis von metalloxidgruppenhaltigem Organopolysiloxan, welches dadurch gekennzeichnet ist, daß es zu 90 bis 97 Gew.-Tln. aus einem organischen Lösungsmittel und zu 3 bis 10 Gew.-Tln. aus einer Titanoxid-gruppenhaltigen Polysiloxanverbindung besteht.

Polyurethan-Formmassen, insbesondere Polyurethanschäume werden in großem Umfang zur Herstellung verschiedenster Formteile und Artikel verarbeitet. Für die Verschäumung verwendet man Formen aus Kunststoff (z.B. aus Epoxidharz) oder aus Metall (z.B. aus Aluminium). Die Polyurethan-Formmassen haften außerordentlich fest an diesen Formen. Es ist deshalb unerläßlich, geeignete Trennmittel zu verwenden. Das Trennmittel wird meistens in Form geeigneter Lösungen (z.B. in organischen Lösungsmitteln) nach jedem Entformungsvorgang in die Form gesprüht. Dabei ist es wichtig, daß das Trennmittel in der Form keine Rückstände bildet und daß

Le A 22 823

- 2 -

keine Reste von Polyurethan-Formmassen in der Form zurückbleiben, da dadurch die Abformgenauigkeit der herzustellenden Formteile beeinträchtigt wird.

Als Trennmittel bieten sich Silicone an. In Form der Dimethylpolysiloxane sind sie jedoch ungeeignet, da sie keine Trenneigenschaften gegenüber Polyurethan aufweisen.

Überraschenderweise hat sich aber herausgestellt, daß aus dem großen Angebot verschiedenster Organopolysiloxane solche, bei denen in der Siloxankette TiO-Gruppen eingebaut sind, sich für den gewünschten Zweck hervorragend eignen. Geeignete Substanzen können durch Abmischen von Siliconölen mit Titanverbindungen hergestellt werden.

Diese Wirkung ist um so überraschender, da bekannt ist, daß Alkyltitanatverbindungen als Haftvermittler wirken und zur Verbesserung der Haftung verschiedenster Beschichtungsmassen, Harze, von Polyethylen, Siliconkautschuk, Klebstoffen und auch Polyurethan eingesetzt werden (vgl. US-PS 3080266, US-PS 2838418, US-PS 2751314, IT-PS 7018231, FR-PS 1542494, DE-PS 1117248, US-PS 2736721).

Gegenstand der vorliegenden Erfindung ist somit ein Trennmittel für Polyurethan-Formmassen auf Basis Organopolysiloxan, welches dadurch gekennzeichnet ist, daß es aus 90-97 Gew.-Tl. eines organischen Lösungsmittels und an 3-10 Gew.-Teilen eines TiO-Gruppenhaltigen Polysiloxan besteht.

Le A 22 823

Die Wirkung des Trennmittels für Polyurethan-Formmassen beruht auf einem synergistischen Effekt der Einzelsubstanzen des Gemisches. Polysiloxane alleine und die beanspruchten Metallverbindungen alleine besitzen gegenüber Polyurethan keine Trennwirkung. Alkyltitanate wirken im Gegenteil als Haftvermittler. Sobald jedoch Mischungen dieser beiden Verbindungsklassen - wie in der vorliegenden Erfindung - eingesetzt werden, erhält man gegenüber Polyurethan ausgezeichnete Trenneigenschaften.

Dabei spielt es keine Rolle, ob die zur Herstellung des Polyurethan verwendete Komponente ein Polyether oder Polyester ist.

Gegenstand der Erfindung ist ferner ein Verfahren zur trennwirksamen Ausrüstung von Formen für Polyurethan-Formmassen durch Aufbringen des erfindungsgemäßen Trennmittels.

Geeignete Ausgangssubstanzen für das erfindungsgemäße Mittel sind OH-gruppenhaltige Polydimethylsiloxane mit einer Viskosität von 10 bis 100 000 mPas, gemessen bei 25°C. Der Einbau der Metalloxidgruppen in die Polysiloxanverbindung kann z.B. durch Grignard-Reaktion erfolgen. Er läßt sich aber auch in einfacher Weise durch Verrühren eines Titanesters mit einem Polydiorganosiloxan herstellen. Anstelle von OH-gruppenhaltigen Polysiloxanen können auch trimethylsilyl-endgestoppte Polysiloxane vergleichbarer Viskosität eingesetzt werden.

Le A 22 823

Als Metallverbindung eignet sich bevorzugt ortho-Titansäuretetrabutylester. Der Gehalt an Metalloxidgruppen im
Polysiloxan sollte so bemessen sein, daß pro Metalloxid
etwa 1 - 100 SiO-Gruppen vorliegen. Bevorzugt sind 30-40
Gew.-% des beanspruchten Metallesters, bezogen auf den
Polysiloxananteil.

Die für das erfindungsgemäße Verfahren geeigneten metalloxidgruppenhaltigen Polysiloxane werden in organischen
Lösungsmitteln angewandt.

Als Lösungsmittel eignen sich Benzinfraktionen, Fluorkohlenwasserstoffe, chlorierte Kohlenwasserstoffe oder
Gemische hiervon. Die Auswahl der Lösungsmittel richtet
sich nach der Anwendungsart und der Temperatur der Form,
bei der das Lösungsmittel verdampft. Die erfindungsgemäße Polysiloxanmetalloxidverbindung soll dabei in dem
Lösungsmittel in einer Konzentration von etwa 3 bis
10 Gew.-% vorliegen. Diese Lösung kann gegebenenfalls
mit anderen, beispielsweise wachshaltigen Lösungen
oder Dispersionen kombiniert werden.

Das erfindungsgemäße Mittel enthält etwa 90 bis 97 Gew.-
Tle. organisches Lösungsmittel, ausgewählt aus der Gruppe
Benzinfraktionen, Fluorkohlenwasserstoffe und chlorierte
Kohlenwasserstoffe oder Gemische hiervon, vorzugsweise
92-96 Gew.-Tle. und 3 bis 10 Gew.-Tle., vorzugsweise 4
bis 8 Gew.-Tle. der Polysiloxantitanesterverbindung.

Die erfindungsgemäße Anwendung kann bei beliebigen Poly-

Le A 22 823

urethan-Formmassen erfolgen. Dabei spielen die Art der Herstellung und die Ausgangskomponenten der Polyurethan-Formmassen keine Rolle. Das erfindungsgemäße Mittel bzw. seine Anwendung können für alle gängigen PU-Typen wie sie z.B. im "Kunststoff Handbuch, 7. Polyurethane, 2. Auflage, Hauser-Verlag 1983" beschrieben sind, eingesetzt werden.

Der Gegenstand der vorliegenden Erfindung soll nun anhand der folgenden Beispiele noch näher erläutert werden. Die Angabe "Teile" in den folgenden Beispielen bezieht sich auf Gewichtsteile.

Le A 22 823

Beispiele

1. Zu 28,8 Teilen eines $\delta$, $\omega$-Hydroxipolydimethylsiloxans der Viskosität 1000 mP.s werden 11,2 Teile ortho-Titansäuretetrabutylester unter Rühren zugegeben. Dadurch erhält man einen Anstieg der Viskosität, die schließlich wieder auf 400 bis 2000 mP.s abfällt. Nach einstündigem Rühren werden 40 Teile Test-Benzin mit Siedebereich von ca. 140-180°C zugegeben und nach weiterer Rührzeit von 10 Minuten gibt man 920 Teile 1,1,1-Trichlorethan zu. Es entsteht eine dünnflüssige Lösung.

Überprüfung der Trennwirkung:

Für diesen Zweck werden Polyurethan-Schäume mit integraler Außenhaut aus handelsüblichem Polyetherpolyol und Isocyanat hergestellt. Die Formschäume haben eine Rohdichte von bis zu 300 kg/m$^3$, mindestens aber 45 kg/m$^3$. Die Verschäumung wird in einer beheizbaren Form von 850 cm$^3$ Volumen durchgeführt. Die Form besteht aus galvanisiertem Stahlblech.

Mit dem gemäß Beispiel 1 beschriebenen Trennmittel wird die Stahlform mittels einer Sprühanlage dünn eingesprüht. Die Tempeatur der Form beträgt etwa 50°C. Anschließend werden die zur Herstellung des Polyurethan-Schaums benötigten Reaktionspartner

Le A 22 823

eingebracht. Nach erfolgter Schäumung wird die Form nach einer Aushärtezeit von 5 Minuten geöffnet. Die Form läßt sich leicht öffnen, das geschäumte Teil löst sich sehr leicht von der Form und kann mühelos entnommen werden.

Nach einmaliger Behandlung der Form mit dem gemäß Beispiel 1 hergestellten Mittel können bis zu 5 Schäumungen durchgeführt werden, ohne daß der Trennmittelfilm erneuert werden muß. Das Trennmittel bildet in der Form keine Rückstände; aufgrund der guten Trennwirkung des erfindungsgemäßen Mittels bleiben keine Polyurethan-Rückstände in der Form zurück, die die Maßhaltigkeit der herzustellenden Formteile verändern würden.

Le A 22 823

## Vergleichsbeispiele

2a)  Ersetzt man in Beispiel 1 den Titansäurebutylester durch Zirkonester, wie Tetrabutylzirkonat, und verfährt wie in Beispiel 1 beschrieben, erhält man Produkte, die die gewünschten Eigenschaften nicht zeigen.

b)  Ersetzt man in Beispiel 1 den Titansäurebutylester durch Zinnverbindungen, wie Dibutylzinndilaurat, und verfährt wie in Beispiel 1 beschrieben, erhält man Produkte, die die gewünschten Eigenschaften nicht zeigen.

c)  Ersetzt man in Beispiel 1 den Titansäurebutylester durch andere Polyorganosiloxane, deren Harze oder durch Lösungsmittel, so wird die gewünschte Wirkung nicht erhalten.

d)  Ersetzt man in Beispiel 1 das $\alpha$ - $\omega$ -Hydroipoly-dimethylsiloxan durch trimethyl-siloxy-endständige Siliconöle, so erhält man Trennmittel mit den gewünschten Eigenschaften.

e)  Erniedrigt man im Beispiel 1 die Zugabe an ortho-Titansäuretetrabutylester auf 7 Teile oder erhöht man die Zugabe auf 14 Teile, so erhält man Produkte, die die gewünschten Trenneigenschaften nicht zeigen, sondern vielmehr eine starke Haftung gegenüber Polyurethan verursachen.

Le A 22 823

0151388

Patentansprüche

1. Trennmittel für Polyurethan-Formmassen auf Basis Organopolysiloxan, dadurch gekennzeichnet, daß das Trennmittel aus 90-97 Gew.-Teilen eines organischen Lösungsmittels und aus 3-10 Gew.-Teilen eines TiO-gruppenhaltigen Polysiloxans besteht.

2. Verfahren zur trennwirksamen Ausrüstung von Formen für Polyurethan-Formmassen, dadurch gekennzeichnet, daß man auf die Formen ein Trennmittel gemäß Anspruch 1 aufbringt.

3. Verwendung eines TiO-gruppenhaltigen Polysiloxans im Gemisch mit einem organischen Lösungsmittel als Trennmittel für Polyurethan-Formmassen.

Le A 22 823